# EUROPÄISCHE PATENTSCHRIFT

(11) **EP 0 342 509 B1**
(45) Veröffentlichungstag und Bekanntmachung des Hinweises auf die Patenterteilung: **27.07.1994**
(21) Anmeldenummer: 89108422.0
(22) Anmeldetag: 10.05.1989
(51) Int. Cl.: F02P 7/06, G01P 3/488

(54) **Winkelimpulsgeber**
Angle pulse generator
Générateur d'impulsion d'angle

(30) Priorität: 16.05.1988 DE 3816642
(43) Veröffentlichungstag der Anmeldung: 23.11.1989
(73) Patentinhaber: SIEMENS AKTIENGESELLSCHAFT, 80333 München (DE)
(72) Erfinder: Pernpeintner, Alfons, Dipl.-Ing., D-8301 Langquaid (DE)

(56) Entgegenhaltungen:
- EP-A- 0 076 982
- DE-A- 2 532 226
- FR-A- 2 245 930
- US-A- 3 980 913
- US-A- 4 024 458
- PATENT ABSTRACTS OF JAPAN, Band 8, Nr. 170 (M-315)[1607], 7. August 1984, Seite 155 M 315; & JP-A-59 65 571

## Beschreibung

Die Erfindung betrifft einen Winkelimpulsgeber gemäß Oberbegriff von Anspruch 1.

Ein solcher Winkelimpulsgeber ist aus der DE-A-25 32 226 bekannt. Dabei wird ein Abtastkopf mit einer Primärwicklung und einer Sekundärwicklung verwendet. Die Primärwicklung wird mit einer Wechselspannung bestimmter Frequenz - Primärspannung - gespeist und dadurch in der Sekundärwicklung eine Sekundärspannung induziert. Ein Auswerter erzeugt ein Ausgangssignal, das von der Phasendifferenz zwischen dieser Sekundärspannung und der Primärspannung abhängt, die durch Material und Abstand eines vorbeilaufenden Geberteils bestimmt ist. Das Geberteil hat Markierungen z.B. in Form von Zähnen, die beim Vorbeilaufen einen geringeren Abstand vom Abtastkopf haben als die dazwischenliegenden Lücken. Dementsprechend ist das Ausgangssignal für Zähne und Lücken unterschiedlich groß, hat also einen Signalhub.

Die Erfindung beruht auf der Feststellung, daß dieser Signalhub nicht nur von dem Abstand zwischen Zähnen und Abtastkopf sondern vor allem auch von der Relation zwischen der Größe der Lücken und dem Durchmesser des Abtastkopfes abhängt. Ein gegebener Abtastkopf war daher bisher nur in Verbindung mit einem Geberteil brauchbar, dessen Konturen und Abmessungen nur in engen Grenzen variiert werden konnten. Es war also beispielsweise nicht möglich, mit demselben Abtastkopf ein Geberrad mit 60 Zähnen und ein solches mit 24 Zähnen bei brauchbaren Ergebnissen abzutasten.

Aus US-A-4 024458 ist ein Induktivgeber bekannt, bei dem zwei mal zwei Induktivaufnehmer so gegenüber einem Zahnkranz angeordnet sind, daß die Signale vom Zahn und Lücke gegenläufig sind, die aber nur bei sich bewegenden Zahnkranz erscheinen. Durch Vergleich der beiden Signale ergibt sich die Funktion einer empfindlichen Brückenschaltung mit hoher Auflösung. Wegen der Empfindlichkeit ist dieses System leicht durch in der Nähe des Sensorkopfes auftretende Störungen beeinflußbar. Zum Beispiel können nahe am Sensorkopf vorbeilaufende Zahnräder zusätzliche Flußänderungen hervorrufen, die zu empfindlichen Störungen der Brückenschaltung und damit zu falscher Ermittlung von nicht vorhandenen Zähnen führen. Ein "Kurzschlußring" verhindert ein Verstimmen der Brückenschaltung durch mechanisch bewegte Teile von der Seite her.

Der Erfindung liegt die Aufgabe zugrunde, einen Winkelimpulsgeber der eingangs genannten Art so weiterzubilden, daß ein für die Unterscheidung von Zähnen und Lücken ausreichender Signalhub von Kontur und Abmessungen des Geberteiles im wesentlichen unabhängig ist.

Die erfindungsgemäße Lösung dieser Aufgabe ist in Anspruch 1 gekennzeichnet.

Die Lösung dieser Aufgabe wurde durch die Tatsache erschwert, daß kein Modell bekannt ist, das die Zusammenhänge zwischen den Abmessungen des Abtastkopfes und denen des Geberteiles veranschaulicht. Die Versuche zeigen lediglich, daß das einer zu großen Lücke zuzuordnende Ausgangssignal zu groß wird, so daß sich bezüglich dem einem Zahn zuzuordnenden Ausgangssignal ein nicht mehr sicher auswertbarer Signalhub ergibt.

Die Erfindung beruht nun auf folgender Aufklärung der Zusammenhänge bei einem bekannten Geber: Solange sich eine Lücke des Geberteils über dem Abtastkopf befindet, ist die Kopplung zwischen den beiden Wicklungen durch das relativ labile Streufeld zwischen den Stirnseiten von Hohl- und Vollzylinder bestimmt; dabei ergibt sich beispielsweise eine Phasenverschiebung von 30°, die ein relativ hohes Ausgangssignal zur Folge hat.

Nähert sich nun ein Zahn dem Abtastkopf, dann wird der für die Kopplung der beiden Wicklungen maßgebende Anteil des Streufeldes zunächst reduziert, da der Zahn Feldlinien aus dem die Wicklungen koppelnden Flußkreis abzieht. Das Ausgangssignal steigt jedoch sehr stark an, sobald der Zahn den Hohlzylinder überdeckt und den Vollzylinder erreicht. Verfolgt man also den Verlauf des Ausgangssignales abhängig von der Bewegung des Zahnes über den Abtastkopf, so stellt man fest, daß dieses Signal zunächst bei der Annäherung von einem hohen Wert nahe gegen Null abfällt, um dann wieder stark anzusteigen. Diese "Unstetigkeitsstelle" macht es unmöglich, einer bestimmten Amplitude des Ausgangssignales eine bestimmte Stellung des Zahnes des Geberteiles zuzuordnen.

Der erfindungsgemäße Streuflußrückleiter verändert nun die Form und Größe des die beiden Wicklungen koppelnden Feldes - bei einer Lücke des Geberteiles - derart, daß die beiden Wicklungen nur sehr schwach gekoppelt sind, woraus ein signifikant kleines Ausgangssignal resultiert. Diese Situation wird bei entsprechender Anordnung (im Bereich dieses Streufeldes, also nahe der dem Geberteil zugewandten Hälfte der Primärwicklung) und Auslegung (Material und Abmessungen) des Streuflußrückleiters bei Annäherung eines Zahnes nur geringfügig verändert. Die Annäherung des Zahnes bewirkt also keine Reduzierung eines vorher großen Ausgangssignals, sondern dieses steigt mit zunehmender Annäherung des Zahnes stetig an. Damit ist aber auch eine eindeutige Zuordnung der Lage einer Zahnflanke zu der Größe des Ausgangssignales möglich.

Ein weiterer Vorteil des Streuflußrückleiters ist, daß der Winkelimpulsgeber dadurch auch gegenüber ihn umgebendem magnetisch leitfähigem Material (z.B. Motorblock) unempfindlich ist. Ein Winkelimpulsgeber ohne Streuflußrückleiter muß jeder Einbausituation speziell angepaßt werden, da nach Art, Menge und räumlicher Zuordnung dieses umgebende Material ein Geberteil in gewisser Entfernung vortäuscht, so daß beim Abtasten einer Lücke des Geberteils die Phasenverschiebung nicht voll auf Null zurückgehen kann. Damit wird der Unterschied in der Phasenverschiebung zwischen Lücke und Zahn geringer und schwieriger auswertbar. Der Streuflußrückleiter schützt den Winkelimpulsgeber auch gegen diese undefinierte Beeinflussung, so daß sich für verschiedene Umgebungsbedingungen stets die gleiche Phasenverschiebung von 0° beim Abtasten einer Lücke des Geberteils ergibt.

Die Erfindung wird anhand der Figur näher erläutert. Die Figur zeigt einen Schnitt durch einen Abtastkopf eines Winkelimpulsgebers gemäß Erfindung.

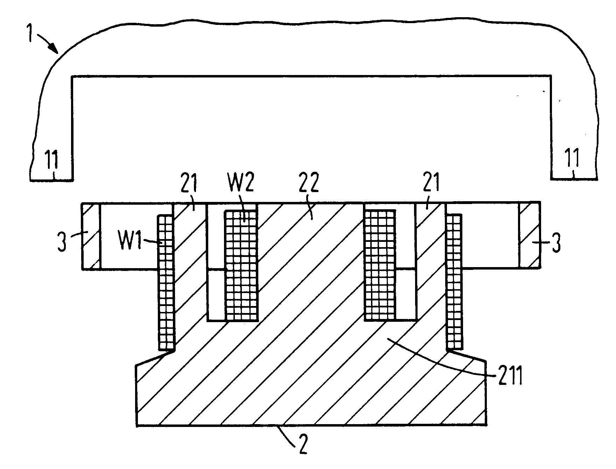

In der FIG 2 ist ein Abtastkopf 2 aus Ferrit dargestellt, der ein an ihm vorbeilaufendes Geberteil 1 mit Zähnen 11 und dazwischenliegenden Lücken abtastet. Der Kern des Abtastkopfes 2 ist gebildet aus einem Vollzylinder 22 mit einem Durchmesser von 3 mm und einem diesen koaxial umgebenden Hohlzylinder 21 mit einem Innendurchmesser von 8 mm und einer Wandstärke von 1 mm. Beide umschließen einen Innenraum, der auf einer Seite durch einen Boden 211 geschlossen und auf der anderen Seite zum Geberteil 1 hin offen ist.

Der Boden 211 weist noch einen Teil mit einem vergrößerten Durchmesser auf, und bildet damit eine Anlagefläche für eine um den Hohlzylinder 21 gewickelte Primärwicklung W1. Eine Sekundärwicklung W2 ist um den Vollzylinder 22 gewickelt. Das Verhältnis der Windungszahlen von Primär- und Sekundärwicklung W1/W2 ist gleich 18/198. Die Primärwicklung W1 wird mit einer Wechselspannung von 3 Volt und einer Frequenz von 100 kHz gespeist. An der Sekundärwicklung W2 wird eine von dem vorbeilaufenden Geberteil 1 modulierte Sekundärspannung abgenommen und deren Phasendifferenz mit der sie erzeugenden Wechselspannung gemäß dem in der DE-A-25 32 226 beschriebenen Verfahren ausgewertet. Die dort mit W3 bezeichnete Wicklung ist funktionsgleich mit der Wicklung W2 der Figur.

Ein Streuflußrückleiter 3, der die Primärwicklung W1 ringförmig umschließt, wird von einem elektrisch und magnetisch nicht leitfähigen Abstandshalter aus Kunststoff in seiner Lage gehalten (nicht gezeigt). Der Streuflußrückleiter 3 ist aus Eisen, hat einen Innendurchmesser von 12 mm, eine Stärke von 0,5 mm und eine Länge von 2 mm.

In der in der Figur gezeigten Situation steht dem Abtastkopf 2 gerade eine Lücke des Geberteils 1 gegenüber. Der Abstand zwischen Abtastkopf 2 und Geberteil 1 ist also groß und die magnetische Kopplung zwischen den Wicklungen dementsprechend gering. Deshalb ist der mit der Primärwicklung verkettete Streufluß stark. Der Streuflußrückleiter 3 bildet einen Rückflußweg mit geringem Widerstand für den Fluß und ist so angeordnet, daß sich der magnetische Widerstand des Kreises abhängig vom Abstand von Zähnen oder von Störgegenständen nur wenig ändert. Außerdem verursachen die Wirbelströme im "Schirm" eine definierte magnetische Belastung des Kerns, wodurch die Phasendifferenz, die ohne den Streuflußrückleiter 3 ungefähr 30° wäre, wieder annähernd zu Null wird.

In dem Ausführungsbeispiel gemäß der Figur wird diese Wirkung durch einen Streuflußrückleiter 3 aus dem obengenannten Material und mit den obengenannten Abmessungen erreicht. Winkelimpulsgeber mit abweichenden Dimensionierungen oder anderen magnetischen und elektrischen Daten erfordern auch eine Anpassung des Streuflußrückleiters 3.

Der Streuflußrückleiter 3 muß so ausgelegt werden, daß der bei großem Abstand der Markierung des Geberteils 1 vom Abtastkopf 2 entstehende Streufluß zum größten Teil über den Streuflußrückleiter 3 gebunden wird. Die dadurch entstehende definierte magnetische Belastung des Kerns muß aber so klein bleiben, daß der magnetische Widerstand für den mit beiden Wicklungen verketteten Hauptfluß durch einen am Abtastkopf 2 vorbeikommenden Zahn 11 des Geberteils 1 wesentlich stärker steigt als der Streufluß über den Streuflußrückleiter.

Die dazu notwendige Dimensionierung des Streuflußrückleiters 3 für einen Winkelimpulsgeber wird durch Versuche ermittelt. Wie vorstehend beschrieben, darf die Wirkung dieses Streuflußrückleiters 3 nicht zu groß sein, da er sonst den Winkelimpulsgeber zu sehr bedämpft. Für die Wirkung des Streuflußrückleiters 3 sind hauptsächlich drei Einflußfaktoren maßgebend, die Art des Materials, die Menge des Materials und der Abstand von der Primärspule W1. Die magnetische Wirkung des Streuflußrückleiters 3 ist umso größer, je größer die Wirbelstromverluste des verwendeten Materials sind, je mehr Material verwendet wird und je kleiner der Abstand des Streuflußrückleiters 3 von der Primärspule W1 ist. Daher ist es besonders günstig, daß der radiale Abstand zwischen dem Streuflußrückleiter 3 und der Primärspule W1 größer ist als der Abstand zwischen der Primärspule W1 und der Sekundärspule W2. Der Streuflußrückleiter 3 könnte z.B. ersetzt werden durch ein weichmagnetisches Gehäuse, dessen Innendurchmesser 17 mm beträgt. Die verstärkte Wirkung eines solchen Streuflußrückleiters durch die größere Menge von Material wird dabei durch die geringeren Wirbelstromverluste und den größeren Abstand von der Primärspule W1 wieder kompensiert.

In axialer Richtung, also in Richtung auf das Geberteil 1, sollte der Streuflußrückleiter 3 nicht über die Stirnfläche des Abtastkopfes 2 hinausragen, da sonst der Winkelimpulsgeber stark bedämpft wird. Vorzugsweise liegen die Stirnseiten von Streuflußrückleiter 3, von Vollzylinder 22 und von Hohlzylinder 21 in derselben Ebene, die rechtwinklig zur Symmetrieachse ausgerichtet ist.

## Patentansprüche

1. Winkelimpulsgeber,
der mindestens eine Markierung auf einem beweglichen Geberteil (1) abtastet und beim Vorbeilaufen der Markierung einen Impuls abgibt,
mit einem Abtastkopf (2),
- der einen Hohlzylinder (21) aufweist, der auf der einen Seite offen ist und auf der anderen Seite durch einen Boden (211) geschlossen ist und
- der einen Vollzylinder (22) aufweist, der konzentrisch in dem Honlzylinder (21) auf dem Boden (211) angebracht ist,
mit einer Primärspule (W1), die um den Hohlzylinder (21) gewickelt ist, und
mit einer Sekundärspule (W2), die um den Vollzylinder (21) gewickelt ist,
mit einer Auswerteeinheit,
- welche die Primärwicklung mit einer Wechselspannung bestimmter Frequenz (Primärspannung) speist und
- welche die Phasendifferenz aus der Primärspannung und einer in der Sekundärspule induzierten, von der wenigstens einen Markierung des Geberteils (1) modulierten, Sekundärspannung auswertet und daraus den Impuls bildet,
**dadurch gekennzeichnet,**
daß ein zylindrischer Streuflußrückleiter (3) vorgesehen ist, der wenigstens einen Teil der dem Geberteil zugewandten Hälfte der Primärwicklung (W1) außen koaxial umgibt, und daß Material, Abmessungen und Anordnung des Streuflußrückleiters (3) so gewählt sind,
- daß bei großem Abstand der Markierung (22) des Geberteils (1) vom Abtastkopf (2) der überwiegende Teil des mit der Primärwicklung (W1) verketteten Primärflußes über den Streuflußrückleiter (3) fließt, so daß die Phasendifferenz annähernd 0° wird, und
- daß mit kleiner werdendem Abstand der Markierung (11) vom Abtastkopf (2) diese Phasendifferenz stetig zunimmt.

2. Winkelimpulsgeber nach Anspruch 1,
**gekennzeichnet** durch eine solche Bemessung, daß sich der Primärfluß bei vorbeigehender Markierung des Geber teils (1) um maximal 20 % erhöht.

3. Winkelimpulsgeber nach Anspruch 2,
**dadurch gekennzeichnet,**
daß die Stirnseiten von Streuflußrückleiter (3), von Vollzylinder (22) und von Hohlzylinder (21) in derselben Ebene liegen und diese rechtwinklig zur Symmetrieachse ausgerichtet ist.

4. Winkelimpulsgeber nach Anspruch 3,
**dadurch gekennzeichnet,**
daß der radiale Abstand zwischen dem Streuflußrückleiter (3) und der Primärspule (W1) gleich oder größer ist als der Abstand zwischen der Primärspule (W1) und der Sekundärwicklung (W2).

## Claims

1. Angle pulse generator,
which reads at least one marking on a movable generator part (1) and emits a pulse when the marking passes by, having a read head (2),
- which exhibits a hollow cylinder (21), which is open at one side and is closed by a floor (211) at the other side and
- which exhibits a solid cylinder (22), which is fitted on the floor (211) concentrically within the hollow cylinder (21),
having a primary coil (W1), which is wound around the hollow cylinder (21), and
having a secondary coil (W2), which is wound around the solid cylinder (21),
having an evaluating unit,
- which feeds the primary winding with an alternating voltage of specified frequency (primary voltage) and
- which evaluates the phase difference of the primary voltage and a secondary voltage which is induced in the secondary coil and which is modulated by the at least one marking of the generator part (1), and forms the pulse therefrom
characterized
in that a cylindrical stray flux return line (3) is provided, which outwardly coaxially surrounds at least one part of that half of the primary winding (W1) which faces the generator part, and in that material, dimensions and arrangement of the stray flux return line (3) are selected
- so that, at a large distance from the marking (22) of the generator part (1) from the read head (2), the predominant part of the primary flux linked to the primary winding (W1) flows via the stray flux return conductor (3), so that the phase difference becomes approximately 0°, and
- so that this phase difference constantly increases as the distance of the marking (11) from the read head (2) becomes smaller.

2. Angle pulse generator according to Claim 1,
characterized by dimensioning such that the primary flux increases by a maximum of 20% when the marking of the generator part (1) passes by.

3. Angle pulse generator according to Claim 2,
characterized in that the end faces of stray flux return conductor (3), of solid cylinder (22) and of hollow cylinder (21) lie in the same plane and this plane is aligned at right angles to the axis of symmetry.

4. Angle pulse generator according to Claim 3,
characterized in that the radial distance between the stray flux return conductor (3) and the primary coil (W1) is equal to or greater than the distance between the primary coil (W1) and the secondary winding (W2).

## Revendications

1. Générateur d'impulsions angulaires,
qui détecte au moins un repère sur une partie mobile (1) du générateur et qui envoie une impulsion lors du passage devant le repère, comprenant une tête de détection (2)
- qui comporte un cylindre creux (21) qui est ouvert d'un côté et qui, est fermé par un fond (211) de l'autre côté, et
- qui comporte un cylindre plein (22) disposé dans le cylindre creux (21), concentriquement à celui-ci, et sur le fond (211),
une bobine primaire (W1) enroulée autour du cylindre creux plein (21),
une bobine secondaire (W2) enroulée autour du cylindre plein (22)
une unité d'évaluation
- qui alimente l'enroulement primaire en une tension alternative d'une fréquence déterminée (tension primaire)
- et qui évalue la différence de phase entre la tension primaire et une tension secondaire induite dans la bobine secondaire, et modulée par au moins un repère, de la partie (1) du générateur, et qui en génère l'impulsion,
caractérisé en ce qu'il est un conducteur de retour de flux de dispersion (3) cylindrique, qui entoure coaxialement et à l'extérieur au moins une partie de la moitié de l'enroulement primaire (W1) tournée vers la partie de générateur, et que le matériau, les dimensions et la disposition du conducteur de flux de dispersion (3) sont choisis de façon telle
- que lorsque le repère (11) de la partie (1) du générateur est très éloigné de la tête de détection (2), la partie prépondérante du flux primaire généré par l'enroulement primaire (W1) s'écoule par le conducteur de retour de flux de dispersion (3), si bien que la différence de phase est approximativement de 0°, et
- que lorsque le repère (11) se rapproche de la tête de détection (2) cette différence de phase est en augmentation constante.

2. Générateur d'impulsions angulaires selon la revendication 1,
caractérisé par une dimension telle que lors du passage devant le repère de la partie (1) du générateur, le flux primaire augmente au maximum de 20 %.

3. Générateur d'impulsions angulaires selon la revendication 2, caractérisé en ce que
les côtés frontaux du conducteur de retour de flux de dispersion (23), du cylindre plein (22) et du cylindre creux (21) sont dans le même plan et que ce plan est perpendiculaire à l'axe de symétrie.

4. Générateur d'impulsions angulaires selon la revendication 3, caractérisé en ce que
la distance radiale entre le conducteur de retour de flux de dispersion (3) et la bobine primaire (W1) est égale ou supérieure à la distance entre la bobine primaire (W1) et la bobine secondaire (W2).
